# EUROPÄISCHE PATENTSCHRIFT

(11) **EP 2 187 724 B1**
(45) Veröffentlichungstag und Bekanntmachung des Hinweises auf die Patenterteilung: **30.03.2011**
(21) Anmeldenummer: 07785604.5
(22) Anmeldetag: 09.07.2007
(51) Int. Cl.: A01B 1/22

(54) **AUFNAHME-VORRICHTUNG FÜR STIELGEHALTENE ARBEITSGERÄTE**
MOUNTING SYSTEM FOR HANDLE-HELD IMPLEMENTS
DISPOSITIF DE RÉCEPTION POUR APPAREILS DE TRAVAIL MAINTENUS SUR UN MANCHE

(43) Veröffentlichungstag der Anmeldung: 26.05.2010
(73) Patentinhaber: Polar Wintergeräte GMBH, Buchenlandweg 53 89075 Ulm (DE)
(72) Erfinder: HEILMANN, Edgar, 89075 Ulm (DE)
(74) Vertreter: Dziewior, Joachim
(86) Internationale Anmeldenummer: PCT/DE2007/001206
(87) Internationale Veröffentlichungsnummer: WO 2009/006862

(56) Entgegenhaltungen:
- DE-A1- 3 326 584
- FR-A- 2 348 794
- US-B1- 7 059 420

## Beschreibung

Die Erfindung betrifft eine Aufnahme-Vorrichtung für an einem Stiel gehaltene Arbeitsgeräte, insbesondere Geräte für den Gartenbau, wobei eine an einem Gerät befestigte Blende mit einer Gerätezentrierung und einem Nippel versehen ist, der in eine mit einer Aufnahmehöhlung versehenen Geräteaufnahme eines Stiels einführbar und in eingeführter Position mittels einer an der Geräteaufnahme vorgesehenen Befestigungseinrichtung lösbar fixierbar ist.

Aufnahme-Vorrichtungen der eingangs genannten Art werden im Stand der Technik verwendet (z.B. in der DE 33 26 584 A1), um eine für einen Austausch lösbare Befestigung von an einem Stiel gehaltenen Arbeitsgeräten zu ermöglichen, die zu diesem Zweck mit einem in die Aufnahmehöhlung der Geräteaufnahme einführbaren Nippel versehen sind, der mittels der Befestigungseinrichtung in der Geräteaufnahme lösbar fixierbar ist. Die bekannten Vorrichtungen weisen jedoch den Nachteil auf, dass in die Aufnahmehöhlung einer Geräteaufnahme ungewollt Erde, Sand oder Schmutz eindringen kann oder die Höhlung einer Geräteaufnahme oft auch beispielsweise durch Erde, Sand oder Schmutz mindestens teilweise obstruiert ist, und daher eine Einführung oder zumindest eine vollständige Einführung eines Nippels eines Arbeitsgerätes in die Geräteaufnahme nicht ermöglicht ist, so dass dann auch eine lösbare Fixierung mittels der Befestigungseinrichtung nicht mehr möglich ist.

Aufgabe der Erfindung ist es deshalb, eine Aufnahme-Vorrichtung zu schaffen, mittels derer eine vollständige Einführung eines Nippels eines Arbeitsgerätes auch bei zumindest leichterer Verschmutzung der Höhlung einer Geräteaufnahme durch Erde, Sand oder biologische Abbauprodukte ermöglicht ist.

Für eine Vorrichtung der eingangs genannten Art wird diese Aufgabe mit den Merkmalen des kennzeichnenden Teils des Anspruchs 1 gelöst.

Bevorzugte Ausführungsformen der Erfindung sind Gegenstand der Unteransprüche.

Bei der erfindungsgemäßen Vorrichtung wird durch das Merkmal, dass eine lange Seite des Rechtecks länger eine Diagonale des Sechsecks bemessen ist und eine kurze Seite des Rechtecks kürzer als Diagonale des Sechsecks bemessen ist, erreicht, dass eine feste mechanische Verbindung prozentual vergleichsweise großer Flächenteile zwischen einem Nippel und einer Innenwandung einer Aufnahmehöhlung einer Geräteaufnahme auch dann gegeben ist, wenn einige Bereiche der Innenwandung der Aufnahmehöhlung von Erde, Sand oder biologischen Abbauprodukten verschmutzt sind.

Dieses Ergebnis wird dadurch erreicht, dass die Innenwandung der Aufnahmehöhlung aufgrund ihrer spezifischen erfindungsgemäßen Ausbildung stets Freiräume aufweist, in die geringere Mengen von Erde, Sand oder biologischen Abbauprodukten hineinverdrängt werden können, ohne dass dabei die Stabilität der Lagerung eines Nippels in der Aufnahmehöhlung beeinträchtigt wäre. Eine ausreichende Stabilität ist dabei durch den immer noch ausreichend großen Flächenkontakt zwischen der Außenwandung eines Nippels und der Innenwandung einer Aufnahmehöhlung gegeben.

Gemäß der erfindungsgemäßen Vorrichtung ist vorgesehen, dass eine lange Seite des Rechtecks länger eine Diagonale des Sechsecks bemessen ist und eine kurze Seite des Rechtecks kürzer oder gleich einer Schlüsselweite des Sechsecks bemessen ist. Eine lange Seite eines Rechtecks ist dabei vorzugsweise parallel zu zwei parallelen Seiten des Sechsecks ausgerichtet.

Gemäß der erfindungsgemäßen Vorrichtung ist vorgesehen, dass eine lange Seite eines Rechtecks teilweise im Bereich einer Seite des Sechsecks zu liegen kommt. In bevorzugten Ausführungsformen der Erfindung können die langen Seiten eines Rechtecks symmetrisch zwischen zwei parallelen Seiten des Sechsecks zu liegen kommen, oder die langen Seiten eines Rechtecks können asymmetrisch zwischen zwei parallelen Seiten des Sechsecks zu liegen kommen.

Gemäß einer weiteren bevorzugten Ausführungsform der erfindungsgemäßen Vorrichtung ist vorgesehen, dass der Mittelpunkt des Rechtecks mit dem Mittelpunkt des Sechsecks übereinstimmt. Alternativ kann der Mittelpunkt des Rechtecks gegenüber dem Mittelpunkt des Sechsecks auch lateral verschoben angeordnet sein.

Die Befestigungseinrichtung kann herkömmlicherweise von einer in der Geräteaufnahme gelagerten und durch die Geräteaufnahme in die Aufnahmehöhlung geführten Schraube gebildet sein. Alternativ kann die Befestigungseinrichtung auch von einem in der Geräteaufnahme gelagerten und durch die Geräteaufnahme in die Aufnahmehöhlung eingreifenden elastisch gelagerten Stift gebildet sein.

Die erfindungsgemäße Vorrichtung wird im Folgenden anhand einer bevorzugten Ausführungsform erläutert, die in den Figuren der Zeichnung dargestellt sind. Darin zeigen:
- Fig. 1: ein mit einer Blende, einer Gerätezentrierung und einem Nippel versehenes Arbeitsgerät zur lösbaren Aufnahme in einer in Figur 2 dargestellten Geräteaufnahme eines Stiels in einer Ansicht schräg von der Seite;
- Fig. 2: einen Stiel mit einer Geräteaufnahme für einen in Figur 1 dargestellten Nippel in einer Ansicht schräg von der Seite;
- Fig. 3: eine erste bevorzugte Ausführungsform der Aufnahmehöhlung einer erfindungsgemäßen Aufnahme- Vorrichtung in einer Querschnittsansicht;
- Fig. 4: eine zweite bevorzugte Ausführungsform der Aufnahmehöhlung einer erfindungsgemäßen Aufnahme- Vorrichtung in einer Querschnittsansicht;
- Fig. 5: eine dritte bevorzugte Ausführungsform der Aufnahmehöhlung einer erfindungsgemäßen Aufnahme- Vorrichtung in einer Querschnittsansicht;
- Fig. 6: eine vierte bevorzugte Ausführungsform der Aufnahmehöhlung einer erfindungsgemäßen Aufnahme- Vorrichtung in einer Querschnittsansicht.

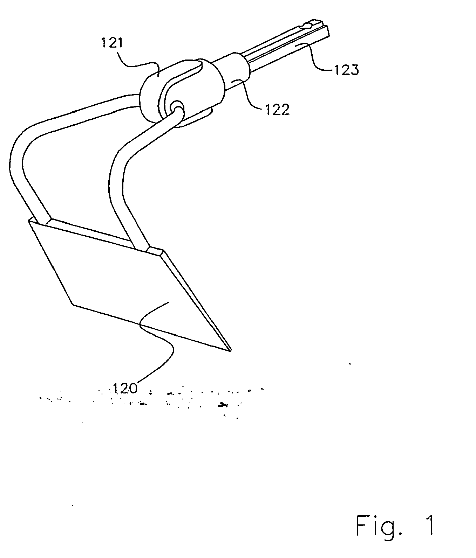

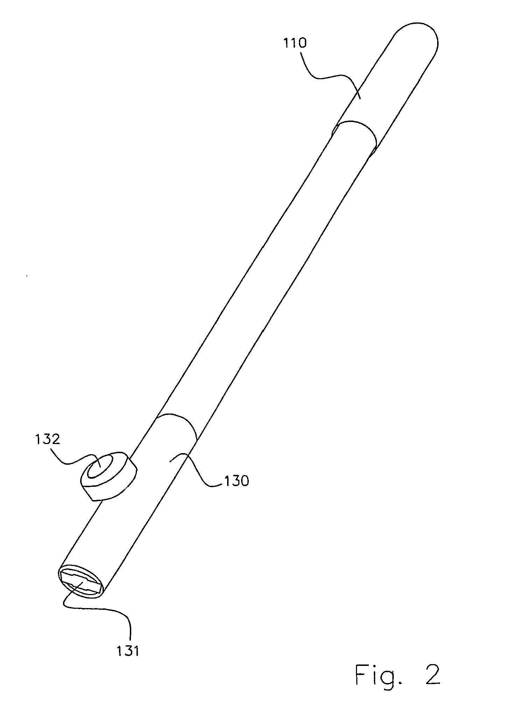

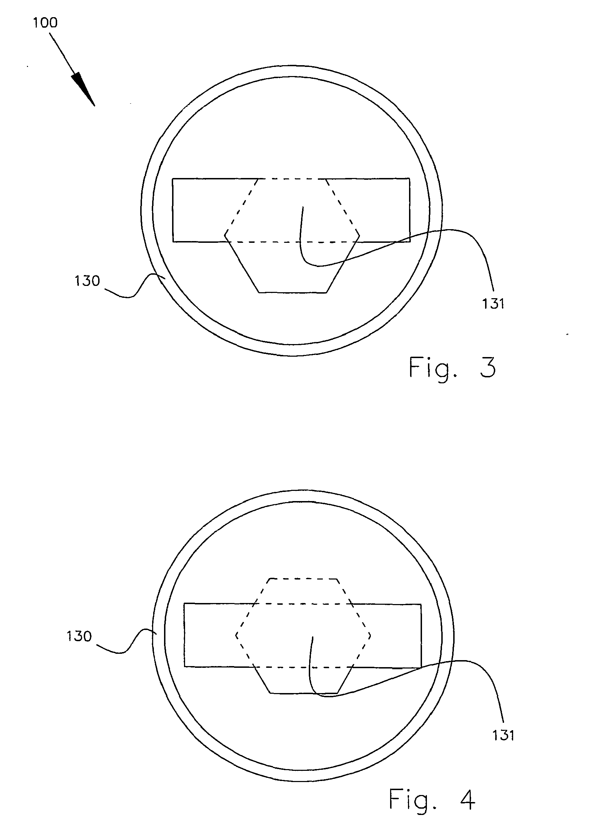

Die in den Figuren 3 bis 6 dargestellten Ausführungsformen der erfindungsgemäße Aufnahme-Vorrichtung 100 sind für an einem Stiel 110 gemäß Figur 2 gehaltene Arbeitsgeräte 120 gemäß Figur 1 vorgesehen, wobei insbesondere Geräte 120 für den Gartenbau zum Einsatz kommen. Eine an einem Gerät 120 befestigte Blende 121 ist dabei mit einer Gerätezentrierung 122 und einem Nippel 123 versehen, der in eine mit einer Aufnahmehöhlung 131 versehenen Geräteaufnahme 130 eines Stiels 110 einführbar und in eingeführter Position mittels einer an der Geräteaufnahme 130 vorgesehenen Befestigungseinrichtung 132 lösbar fixierbar ist. Der lichte Querschnitt der Aufnahmehöhlung 131 der Geräteaufnahme 130 ist dabei jeweils aus einem Rechteck und einem Sechseck zusammengesetzt.

Bei allen dargestellten Ausführungsformen ist eine lange Seite des Rechtecks länger eine Diagonale des Sechsecks bemessen und eine kurze Seite des Rechtecks kürzer oder gleich einer Schlüsselweite des Sechsecks bemessen ist. Des Weiteren ist eine lange Seite eines Rechtecks jeweils parallel zu zwei parallelen Seiten des Sechsecks ausgerichtet.

Bei der in Figur 3 dargestellten bevorzugten Ausführungsform der Erfindung kommt eine lange Seite eines Rechtecks teilweise im Bereich einer Seite des Sechsecks zu liegen.

Bei der in Figur 4 dargestellten bevorzugten Ausführungsform der Erfindung kommen die langen Seiten eines Rechtecks symmetrisch zwischen zwei parallelen Seiten des Sechsecks zu liegen.

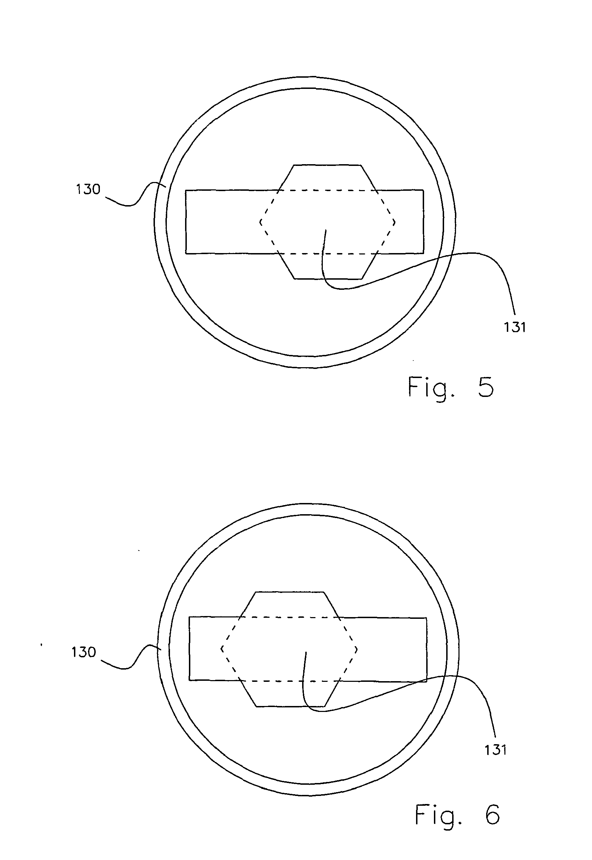

Bei der in Figur 5 dargestellten bevorzugten Ausführungsform der Erfindung kommen die langen Seiten eines Rechtecks asymmetrisch zwischen zwei parallelen Seiten des Sechsecks zu liegen.

Bei der in Figur 4 dargestellten bevorzugten Ausführungsform der Erfindung stimmt der Mittelpunkt des Rechtecks mit dem Mittelpunkt des Sechsecks überein.

Bei der in Figur 6 dargestellten bevorzugten Ausführungsform der Erfindung ist der Mittelpunkt des Rechtecks gegenüber dem Mittelpunkt des Sechsecks lateral verschoben angeordnet.

Die Befestigungseinrichtung 132 ist von einer in der Geräteaufnahme 130 gelagerten und durch die Geräteaufnahme 130 in die Aufnahmehöhlung 131 geführte Schraube gebildet.

Die Befestigungseinrichtung 132 ist von einem in der Geräteaufnahme 130 gelagerten und durch die Geräteaufnahme 130 in die Aufnahmehöhlung 131 eingreifenden elastisch gelagerten Stift gebildet.

Die oben erläuterten Ausführungsbeispiele der Erfindung dienen lediglich dem Zweck eines besseren Verständnisses der durch die Ansprüche definierten erfindungsgemäßen Lehre, die als solche durch die Ausführungsbeispiele nicht eingeschränkt ist.

## Patentansprüche

1. Aufnahme-Vorrichtung (100) für an einem Stiel (110) gehaltene Arbeitsgeräte (120), insbesondere Geräte (120) für den Gartenbau, wobei eine an einem Gerät (120) befestigte Blende (121) mit einer Gerätezentrierung (122) und einem Nippel (123) versehen ist, der in eine mit einer Aufnahmehöhlung (131) versehenen Geräteaufnahme (130) eines Stils (110) einführbar und in eingeführter Position mittels einer an der Geräteaufnahme (130) vorgesehenen Befestigungseinrichtung (132) lösbar fixierbar ist, wobei der lichte Querschnitt der Aufnahmehöhlung (131) der Geräteaufnahme (130) aus einem Rechteck und einem Sechseck zusammengesetzt ist, **dadurch gekennzeichnet, dass** eine lange Seite des Rechtecks länger als eine Diagonale des Sechsecks bemessen ist und parallel zu zwei parallelen Seiten des Sechsecks ausgerichtet ist und im Bereich einer Seite des Sechsecks zu liegen kommt, und eine kurze Seite des Rechtecks kürzer oder gleich einer Schlüsselweite des Sechsecks bemessen ist.

2. Vorrichtung nach Anspruch 1, **dadurch gekennzeichnet, dass** die langen Seiten eines Rechtecks symmetrisch zwischen zwei parallelen Seiten des Sechsecks zu liegen kommen.

3. Vorrichtung nach Anspruch 1, **dadurch gekennzeichnet, dass** die langen Seiten eines Rechtecks asymmetrisch zwischen zwei parallelen Seiten des Sechsecks zu liegen kommen.

4. Vorrichtung nach einem der Ansprüche 1 bis 3, **dadurch gekennzeichnet, dass** der Mittelpunkt des Rechtecks mit dem Mittelpunkt des Sechsecks übereinstimmt.

5. Vorrichtung nach einem der Ansprüche 1 bis 3, **dadurch gekennzeichnet, dass** der Mittelpunkt des Rechtecks gegenüber dem Mittelpunkt des Sechsecks lateral verschoben angeordnet ist.

6. Vorrichtung nach einem der vorhergehenden Ansprüche, **dadurch gekennzeichnet, dass** die Befestigungseinrichtung (132) von einer in der Geräteaufnahme (130) gelagerten und durch die Geräteaufnahme (130) in die Aufnahmehöhlung (131) geführten Schraube gebildet ist.

7. Vorrichtung nach einem der vorhergehenden Ansprüche, **dadurch gekennzeichnet, dass** die Befestigungseinrichtung (132) von einem in der Geräteaufnahme (130) gelagerten und durch die Geräteaufnahme (130) in die Aufnahmehöhlung (131) eingreifenden elastisch gelagerten Stift gebildet ist.

## Claims

1. A mounting device (100) for working implements (120) held on a stick (110), in particular implements (120) for horticulture, wherein a cover (121) fixed to an implement (120) is provided with an implement centering means (122) and a nipple (123) which can be introduced into an implement mounting (130) of a stick (110), that is provided with a mounting cavity (131), and can be releasably fixed in the introduced position by means of a fixing device (132) provided on the implement mounting (130), wherein the internal cross-section of the mounting cavity (131) of the implement mounting (130) is composed of a rectangle and a hexagon, **characterised in that** a long side of the rectangle is longer than a diagonal of the hexagon and is oriented parallel to two parallel sides of the hexagon and comes to lie in the region of a side of the hexagon and a short side of the rectangle is shorter than or equal to a width across the flats of the hexagon.

2. A device according to claim 1 **characterised in that** the long sides of a rectangle come to lie symmetrically between two parallel sides of the hexagon.

3. A device according to claim 1 **characterised in that** the long sides of a rectangle come to lie asymmetrically between two parallel sides of the hexagon.

4. A device according to one of claims 1 to 3 **characterised in that** the centre point of the rectangle coincides with the centre point of the hexagon.

5. A device according to one of claims 1 to 3 **characterised in that** the centre point of the rectangle is arranged laterally displaced with respect to centre point of the hexagon.

6. A device according to one of the preceding claims **characterised in that** the fixing device (132) is formed by a screw which is mounted in the implement mounting (130) and which is passed through the implement mounting (130) into the mounting cavity (131).

7. A device according to one of the preceding claims **characterised in that** the fixing device (132) is formed by an elastically mounted pin which is mounted in the implement mounting (130) and which engages through the implement mounting (130) into the mounting cavity (131).

## Revendications

1. Dispositif de réception (100) pour appareils de travail (120) tenus sur un manche (110), notamment des appareils (120) pour le jardinage, dans lequel un cavalier (121) fixé sur un appareil (120) est muni d'un embout de centrage (122) de l'appareil et d'un raccord mâle (123), qui peut être introduit dans un logement d'appareil (130) d'un manche (110) présentant une cavité de réception (131) et qui, en position introduite, peut être fixé de façon amovible au moyen d'un dispositif de fixation (132) prévu sur le logement d'appareil (130), dans lequel la section transversale libre de la cavité de réception (131) du logement d'appareil (130) est composée d'un rectangle et d'un hexagone, **caractérisé en ce que** la dimension d'un long côté du rectangle est supérieure à une diagonale de l'hexagone et est orientée parallèlement à deux côtés parallèles de l'hexagone et vient s'appliquer dans la région d'un côté de l'hexagone, et la dimension d'un côté court du rectangle est inférieure ou égale à une largeur de clé de l'hexagone.

2. Dispositif selon la revendication 1, **caractérisé en ce que** les longs côtés d'un rectangle viennent se placer symétriquement entre deux côtés parallèles de l'hexagone.

3. Dispositif selon la revendication 1, **caractérisé en ce que** les longs côtés d'un rectangle viennent se placer de façon asymétrique entre deux côtés parallèles de l'hexagone.

4. Dispositif selon l'une quelconque des revendications 1 à 3, **caractérisé en ce que** le point central du rectangle coïncide avec le point central de l'hexagone.

5. Dispositif selon l'une quelconque des revendications 1 à 3, **caractérisé en ce que** le point central du rectangle est déplacé latéralement par rapport au point central de l'hexagone.

6. Dispositif selon l'une quelconque des revendications précédentes, **caractérisé en ce que** le dispositif de fixation (132) est formé par une vis logée dans le logement d'appareil (130) et menée dans la cavité de réception (131) à travers le logement d'appareil (130).

7. Dispositif selon l'une quelconque des revendications précédentes, **caractérisé en ce que** le dispositif de fixation (132) est formé par une tige logée dans le logement d'appareil (130) et appuyée élastiquement s'engageant dans la cavité de réception (131) à travers le logement d'appareil (130).
